# EUROPEAN PATENT SPECIFICATION

(11) **EP 2 628 861 B1**
(45) Date of publication and mention of the grant of the patent: **27.02.2019**
(21) Application number: 11832257.7
(22) Date of filing: 28.09.2011
(51) Int. Cl.: E02F 9/22, E02F 9/20

(54) **CONTROL DEVICE FOR WORKING MACHINE**
STEUERVORRICHTUNG FÜR EINE ARBEITSMASCHINE
DISPOSITIF DE COMMANDE POUR MACHINE DE TRAVAIL

(30) Priority: 13.10.2010 JP 2010230575
(43) Date of publication of application: 21.08.2013
(73) Proprietor: Takeuchi Mfg. Co., Ltd., Nagano 389-0605 (JP)
(72) Inventor: TAKIZAWA, Takahiro, Hanishina-gun Nagano 389-0605 (JP); KUMEUCHI, Kengo, Hanishina-gun Nagano 389-0605 (JP)
(74) Representative: Patentwerk B.V.
(86) International application number: PCT/JP2011/005459
(87) International publication number: WO 2012/049812

(56) References cited:
- GB-B- 2 425 368
- JP-A- 6 235 226
- JP-A- 2005 207 396
- JP-A- 2005 307 791
- JP-A- 2010 084 475
- JP-U- H0 510 803

## Description

### TECHNICAL FIELD

The present invention relates to a control device of an industrial machine used in construction work or the like.

### TECHNICAL BACKGROUND

As an example of such an industrial machine, a power shovel is commonly configured such that a hydraulic pump is driven by an engine or the like, and a hydraulic actuator is actuated by using hydraulic oil supplied from the hydraulic pump. Examples of a hydraulic actuator include a hydraulic motor, a hydraulic cylinder, and the like, but in a power shovel, various work such as travel and excavation is performed by actuating these hydraulic actuators, i.e. booms, arms, buckets, and other hydraulic cylinders, as well as hydraulic motors for performing actions such as traveling and revolving. In addition to traveling and excavating, a power shovel also performs work for moving earth.

Recently, there has been a demand for energy conservation in such industrial machines. Therefore, there are known machines in which when operating levers or the like remain in a non-operating state for a predetermined period of time, for example, the engine speed (rotational velocity) is lowered from the set speed to a lower standby speed, and when the non-operating state continues for a predetermined time at this standby speed, the power supply from a battery to an electric device such as a light is blocked, the engine is then stopped, and the power source for driving the engine is blocked after the engine has stopped (Patent Document 1 describes a control device according to the preamble of claim 1). In this industrial machine, performing such an engine auto-stop control makes it possible to conserve energy and to extend the life of the battery.

### PRIOR ARTS LIST

### PATENT DOCUMENT

Patent Document 1: Japanese Laid-open Patent Publication No. 2005-207396(A)

### SUMMARY OF THE INVENTION

### PROBLEMS TO BE SOLVED BY THE INVENTION

However, in an industrial machine such as the one described above, energy can be conserved and the life of the battery can be extended, but because the hydraulic pressure of the hydraulic circuit for actuating the hydraulic actuator also decreases when the engine is stopped, there have been problems in that after the engine has been stopped, a suitable time is needed when the industrial machine is restarted, and the actuation has an unpleasant sensation, such as the actuating of the actuator lagging during the restarting.

The present invention was devised in view of such problems, it being an object of the present invention to provide a control device of an industrial machine in which energy can be conserved, the life of the battery can be extended, and work can be started smoothly when the engine is restarted.

### MEANS TO SOLVE THE PROBLEMS

To solve the problems described above, the control device of an industrial machine according to the present invention has a mechanism driven by a hydraulic actuator, the control device comprising a first hydraulic pump for supplying hydraulic oil for actuating the hydraulic actuator, a first pump drive device for driving the first hydraulic pump, a control valve for receiving pilot pressure and performing supply control on the hydraulic oil to the hydraulic actuator from the first hydraulic pump, a second hydraulic pump for supplying hydraulic oil for creating pilot pressure, a second pump drive device for driving the second hydraulic pump, an operating device operated in order to control the actuating of the hydraulic actuator, a pilot valve which is actuated based on the operation of the operating device and which creates pilot pressure by using the hydraulic oil pressure supplied from the second hydraulic pump, a second accumulator capable of accumulating and retaining the hydraulic oil pressure supplied from the second hydraulic pump to the pilot valve, a second switching valve which is provided to a second pump oil channel leading from the second hydraulic pump to the pilot valve, and which performs a control for causing the second accumulator to accumulate and retain the hydraulic oil supplied from the second hydraulic pump, or causing the hydraulic oil accumulated in the second accumulator to be supplied to the pilot valve, and a second control device for detecting an operating state of operating means and performing drive control on the second pump drive device as well as actuation control on the second switching valve on the basis of the operating state. When the operating device is in a non-operating state, the second control device stops the driving of the second hydraulic pump by the second pump drive device, and when the operating device is being operated, the second control device performs a control for causing the second hydraulic pump to be driven by the second pump drive device and causing the hydraulic oil accumulated in the second accumulator to be supplied to the pilot valve by the second switching valve.

In the control device of an industrial machine of the configuration described above, it is preferable that until a predetermined time duration has elapsed immediately after the operating device has gone into a non-operating state, the second control device drives the second hydraulic pump at a predetermined low rotation through the second pump drive device, and when the predetermined time duration has elapsed, the driving of the second hydraulic pump is stopped.

In the control device of an industrial machine of the configuration described above, it is preferable that when the operating device is in a non-operating state, the second hydraulic pump has stopped, and the hydraulic pressure accumulated in the second accumulator is equal to or less than a predetermined lower limit hydraulic pressure, the second control device performs a control for causing the second hydraulic pump to be driven at a predetermined low rotation by the second pump drive device and causing the accumulated pressure in the second accumulator to be raised and maintained.

In the control device of an industrial machine of the configuration described above, it is preferable that when the second hydraulic pump is driven at a predetermined low rotation to raise the accumulated pressure in the second accumulator and thereby bring the accumulated pressure to a predetermined upper limit hydraulic pressure, the second control device again stops the driving of the second hydraulic pump by the second pump drive device.

In the control device of an industrial machine of the configuration described above, it is preferable that the second pump drive device is configured from an electric motor.

In the control device of an industrial machine of the configuration described above preferably comprises: a first accumulator capable of accumulating and maintaining hydraulic oil pressure supplied from the first hydraulic pump to the control valve; a first switching valve which is provided to a first pump oil channel leading from the first hydraulic pump to the control valve, and which performs a control for causing the first accumulator to accumulate and retain the hydraulic oil supplied from the first hydraulic pump, and causing the hydraulic oil accumulated in the first accumulator to be supplied to the control valve; and a first control device for detecting the operating state of the operating means and performing drive control on the first pump drive device on the basis of the operating state. When the operating device is in a non-operating state, the first control device stops the driving of the first hydraulic pump by the first pump drive device, and when the operating device is being operated, the first control device performs a control for causing the first hydraulic pump to be driven by the first pump drive device and causing the hydraulic oil accumulated in the first accumulator to be supplied to the control valve by the first switching valve.

In the control device of an industrial machine of the configuration described above, it is preferable that until a predetermined time duration has elapsed immediately after the operating device has gone into a non-operating state, the first control device drives the first hydraulic pump at a predetermined low rotation through the first pump drive device, and when the predetermined time duration has elapsed, the driving of the first hydraulic pump is stopped.

In the control device of an industrial machine of the configuration described above, it is preferable that the first pump drive device is configured from an electric motor.

### ADVANTAGEOUS EFFECTS OF THE INVENTION

In the control device of an industrial machine according to the present invention described above, when the operating means is in a non-operating state, the second control device stops the driving of the second hydraulic pump, and when the operating device is being operated, the second control device performs a control for driving the second hydraulic pump and supplying the hydraulic oil accumulated in the second accumulator to the pilot valve; therefore, needless energy consumption is minimized, energy can be conserved, and the actuator can be actuated smoothly and quickly during operation startup as well.

### BRIEF DESCRIPTION OF THE DRAWINGS

FIG. 1 is a perspective view of a power shovel in which the control device according to the present invention is applied;
FIG. 2 is a circuit diagram showing a hydraulic circuit and an electric circuit installed within the control device; and
FIG. 3 is a graph showing the relationships between time and the pump rotational speed in the control device, the state of the operation signal outputted by the operating device, and the internal pressure of the accumulator.

### DESCRIPTION OF THE EMBODIMENTS

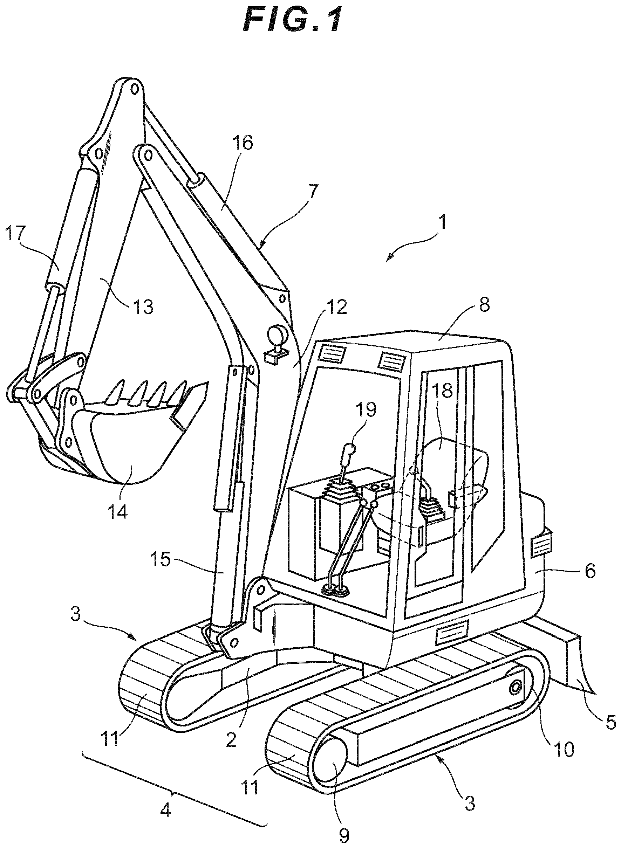

An embodiment of the present invention is described below with reference being made to the drawings. FIG. 1 shows a crawler-type power shovel 1 as an example of an industrial machine to which the control device according to the present invention is applied. This power shovel 1 is configured from a travel device 4 configured with travel mechanisms 3, 3 provided to the left and right of a travel carriage 2 (a vehicle body) that is substantially "H"-shaped in planar view, a blade 5 provided in a vertically swingable manner to the rear part of the travel carriage 2, a revolving platform 6 revolvably provided to the top part of the travel carriage 2, a shovel mechanism 7 provided to the front part of the revolving platform 6, and an operator cabin 8 (a vehicle body) for a driver to occupy, the operator cabin being erected on the top part of the revolving platform 6.

The pair of left and right travel mechanisms 3, 3 constituting the travel device 4 are configured using crawler belts 11 wrapped around drive sprocket wheels 9 provided to the left and right front parts of the travel carriage 2 and idler wheels 10 provided to the left and right rear parts of the travel carriage 2. The drive sprocket wheels 9 are rotatably driven by a traveling hydraulic motor (not shown) actuated by hydraulic pressure. The blade 5 is swung by the actuation of a hydraulically driven blade cylinder (not shown). The revolving platform 6 is revolvably driven by a revolving motor (not shown) actuated by hydraulic pressure (described in detail hereinafter).

The shovel mechanism 7 is configured from: a boom 12 pivotably connected to the front part of the revolving platform 6 so as to be capable of rising and falling movement; an arm 13 pivotably connected to the distal end of the boom 12 so as to be capable of swinging up and down in the plane where the boom 12 rises and falls; a bucket 14 pivotably connected to the distal end of the arm 13 so as to be capable of swinging up and down; and a boom cylinder 15, arm cylinder 16, and bucket cylinder 17 which are hydraulically driven. The boom 12 is raised and lowered according to the extending or retracting action of the boom cylinder 15, the arm 13 is swung up and down according to the extending or retracting action of the arm cylinder 16, and the bucket 14 is swung according to the extending or retracting action of the bucket cylinder 17. In the following description, these cylinders 15 to 17 and the blade cylinder of the blade 5 are collectively referred to as the "group of hydraulic cylinders." The operator cabin 8 is formed in the shape of a rectangular box enclosed on all sides, the interior of which being provided with an operator seat 18 for the driver to sit, and an operating device 19 for performing the actuated operation of the travel device 4 and the shovel mechanism 7.

The operating device 19 is provided with operating levers for performing operations of the power shovel 1 such as travel and excavation. By sitting in the operator seat 18 and operating the operating levers, the driver can control the driving of the group of hydraulic cylinders, the traveling motor, and the revolving motor to cause the power shovel 1 to travel, and control the actuation of the shovel mechanism 7 to perform excavation and other work.

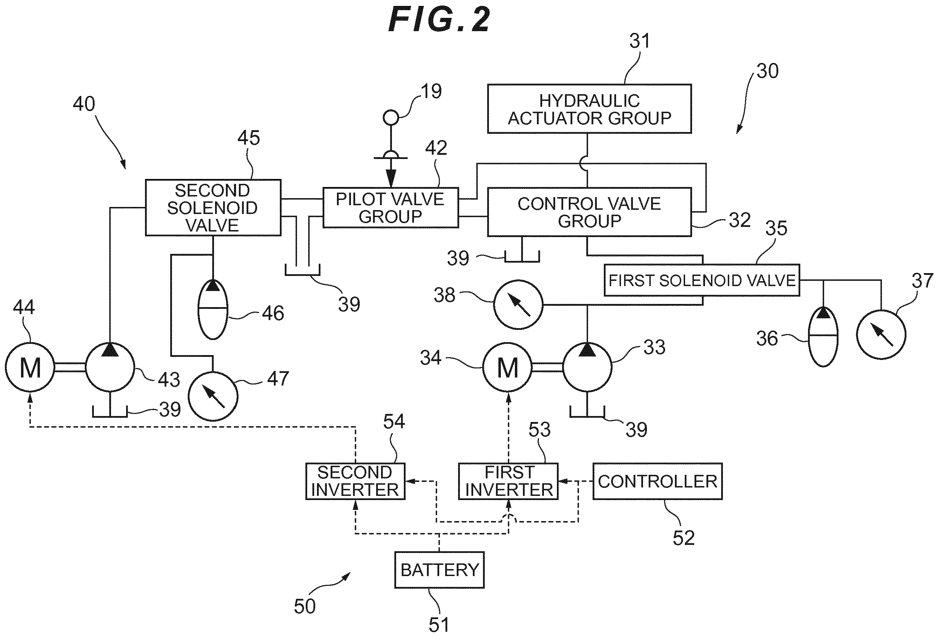

The group of hydraulic cylinders, the traveling motor, and the revolving motor (referred to below as the hydraulic actuator group 31) are actuated by the supply of hydraulic oil, and a control valve group 32 of a first hydraulic unit 30, shown in FIG. 2 described hereinafter, controls this supply of hydraulic oil. Specifically, the control valve group 32 is actuated by receiving the pilot pressure outputted from the a pilot valve group 42 of a second hydraulic unit 40 according to the operation of the operating device 19 by the worker, and the control valve group 32 controls the amount and direction of hydraulic oil supplied to the hydraulic actuator group 31. Thus, the power shovel 1 can be made to travel, the shovel mechanism 7 can be actuated, the revolving platform 6 can be made to revolve, and work such as travel, excavation, and revolving can be performed. The operating device 19 comprises a travel operating lever for operating the travel of the power shovel 1, a boom operating lever for operating components such as the boom, the arm, and the bucket, and a revolution operating lever for operating the revolving of the revolving platform 6.

Thus, the first hydraulic unit 30 is provided in order to output hydraulic pressure for causing the power shovel 1 to perform work such as traveling, excavation, and revolving, and the second hydraulic unit 40 is provided in order to output pilot pressure to the control valve group 32 of the first hydraulic unit 30 according to the lever operations of the operating device 19. The first hydraulic unit 30 and the second hydraulic unit 40 both perform control for supplying hydraulic oil stored in a hydraulic oil tank 39 by using the hydraulic pump. The first hydraulic unit 30 and the second hydraulic unit 40 are described below with reference being made to FIG. 2. In FIG. 2, the hydraulic circuit is depicted in solid lines, and the electric or optical signal circuit is depicted in dashed lines.

The first hydraulic unit 30 comprises the hydraulic actuator group 31 described above, the control valve group 32, a main hydraulic pump 33, a first electric motor 34, a first solenoid valve 35, a first accumulator 36, a first pressure sensor 37, and a second pressure sensor 38. The control valve group 32 comprises a plurality of control valves, and the individual control valves are provided corresponding to the hydraulic actuators (hydraulic cylinders, traveling motor, and revolving motor) of the hydraulic actuator group 31. The control valves are actuated by the pilot pressure outputted according to the operation of the corresponding operating levers, and the supply of hydraulic oil to the corresponding hydraulic actuators is controlled. The main hydraulic pump 33 is driven by the first electric motor 34, and the hydraulic oil to be supplied to the hydraulic actuator group 31 is supplied to the control valve group 32. The first electric motor 34 is driven by receiving an AC current from a first inverter 53, described hereinafter.

The first solenoid valve 35 is provided in the oil channel running from the main hydraulic pump 33 to the control valve group 32, and the first accumulator 36 is connected and provided to the oil channel running from the main hydraulic pump 33 to the control valve group 32 via the first solenoid valve 35. According to a control signal from a controller 52 described hereinafter, the first solenoid valve 35 is capable of switching control for connecting or disconnecting the first accumulator 36 and the side having the control valve group 32 and the main hydraulic pump 33.

The first accumulator 36 is configured so that when the main hydraulic pump 33 is driven, the first accumulator 36 receives the supply of hydraulic oil from the main hydraulic pump 33 via the first solenoid valve 35 and accumulates the hydraulic oil pressure, and at times such as when the main hydraulic pump 33 is stopped, the first solenoid valve 35 is closed to accumulate and retain hydraulic pressure in the first accumulator, and the first solenoid valve 35 is then opened and the accumulated hydraulic oil can be released to the control valve group 32. The first pressure sensor 37 is provided in order to detect the accumulated pressure of the first accumulator 36, the second pressure sensor 38 is provided in order to detect the discharge pressure of the main hydraulic pump 33, and hydraulic pressure information detected by the pressure sensors 37, 38 is sent to the controller 52.

The second hydraulic unit 40 comprises the pilot valve group 42, a pilot pump 43, a second electric motor 44, a second solenoid valve 45, a second accumulator 46, and a third pressure sensor 47. The pilot valve group 42 is comprised of a plurality of pilot valves, and the individual pilot valves are provided corresponding to the operating levers of the operating device 19 and the individual control valves of the control valve group 32. The individual pilot valves are designed so as to supply pilot oil channels with the hydraulic oil discharged from the pilot pump 43 when the corresponding operating levers are operated, and the pilot pressure (remote control pressure) is outputted to the corresponding control valves via the pilot oil channels.

The pilot pump 43 is driven by the second electric motor 44, and is provided in order to supply hydraulic oil to the pilot oil channels. The second electric motor 44 is driven by receiving AC power from a second inverter 54 described hereinafter. The second solenoid valve 45 is provided in an oil channel joining the pilot pump 43 and the pilot valve group 42, and the second accumulator 46 is provided to an oil channel branching from the aforementioned oil channel via the second solenoid valve 45. In response to a control signal from the controller 52, the second solenoid valve 45 performs switching control for connecting the pilot pump 43 and the second accumulator 46 or connecting the second accumulator 46 and the pilot valve group 42. The second accumulator 46 is configured so as to be capable of receiving the supply of hydraulic oil from the pilot pump 43 via the second solenoid valve 45, accumulating the hydraulic oil pressure thereof, and supplying the accumulated hydraulic oil to the pilot valve group 42 at times such as when the pilot pump 43 is stopped. The third pressure sensor 47 is provided in order to detect the accumulated pressure of the second accumulator 46, and the hydraulic pressure information detected by the third pressure sensor 47 is sent to the controller 52.

In addition to the first and second hydraulic units 30, 40 configured as described above, the power shovel 1 is also provided with a power source unit 50 for supplying power for actuating the first and second hydraulic units 30, 40. The power source unit 50 comprises a battery 51, the controller 52, the first inverter 53, and the second inverter 54. The battery 51 outputs DC power to the first and second inverters 53, 54. The first inverter 53 converts the DC power from the battery 51 into AC power, and supplies this AC power to the first electric motor 34 which drives the main hydraulic pump 33. The second inverter 54, similar to the first inverter 53, converts the DC power from the battery 51 into AC power, and supplies this AC power to the second electric motor 44 which drives the pilot pump 43. The battery 51 is designed so that as to be capable of being charged by power from an external commercial power source (not shown) via a charger (not shown), when the work allotted for a given day has ended, for example. The battery 51 can be a secondary cell such as a lithium ion cell or an organic radical cell, for example.

The controller 52, which is provided in order to perform power source supply control of the power source unit 50 in a unified manner, generates control signals on the basis of the accumulated hydraulic pressure of the first accumulator 36 detected by the first pressure sensor 37 described above, the discharge pressure of the main hydraulic pump 33 detected by the second pressure sensor 38, and the accumulated hydraulic pressure of the second accumulator 46 detected by the third pressure sensor 47; and outputs the control signals to the first and second inverters 53, 54. The controller 52 also outputs control signals to the first and second solenoid valves 35, 45, and controls the actuating of the solenoid valves 35, 45. Specifically, when the discharge pressure of the main hydraulic pump 33 detected by the second pressure sensor 38 is equal to or greater than a predetermined value set in advance, the controller 52 performs a control for opening the first solenoid valve 35 so that hydraulic pressure is accumulated in the first accumulator 36, and under predetermined conditions, the controller 52 performs a control for closing the first solenoid valve 35 and maintaining the hydraulic pressure accumulated in the first accumulator 36, or control for opening the first solenoid valve 35 and releasing the accumulated and maintained hydraulic pressure to the control valve group 32.

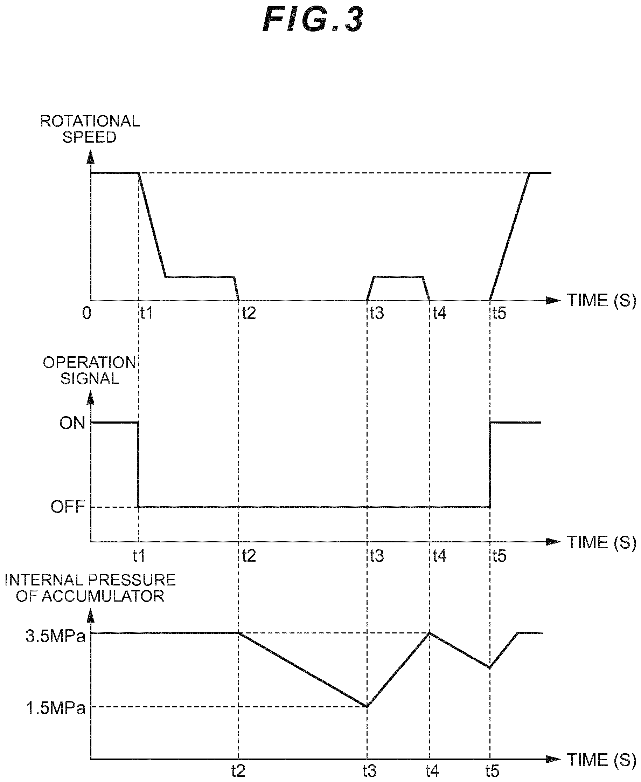

Similarly, when the discharge pressure of the pilot pump 43 detected by the third pressure sensor 47 is equal to or greater than a predetermined value set in advance, the controller 52 controls the second solenoid valve 45 so that hydraulic pressure is accumulated in the second accumulator 46, and under predetermined conditions, the controller 52 performs a control for closing the second solenoid valve 45 and maintaining the hydraulic pressure accumulated in the second accumulator 46, or control for opening the second solenoid valve 45 and releasing the accumulated and maintained hydraulic pressure to the pilot valve group 42. Specifically, the controller 52 is designed to be capable of detecting the operating state of the operating levers of the operating device 19, and when all of the operating levers remain unoperated for at least a set time duration (three to five seconds, for example) set in advance, the controller 52 stops the power supply to the first and second electric motors 34, 44 by the first and second inverters 53, 54. The details of the controlling by the controller 52 are described below with reference made to FIG. 3.

FIG. 3 shows time series graphs depicting the rotational speed (rotational velocity) of the pilot pump 43, the ON/OFF state of the operation signal outputted from the operating device 19, and the state of the internal pressure of the second accumulator 46 described above. FIG. 3 shows an operative example, wherein the operating levers of the operating device 19 are operated during work, and the pump goes from being rotatably driven in a normal state to being not operated when the operating levers of the operating device 19 cease to be operated at time t1. As can be seen from these graphs, when the operating levers of the operating device 19 cease to be operated, the controller 52 puts the pilot pump 43 into a state of low rotation. Measurement of the time duration of this non-operation state is initiated, and when the non-operation state continues for a predetermined time duration and reaches time t2, the power supply to the second electric motor 44 by the second inverter 54 is stopped, and the pilot pump 43 ceases to be rotatably driven.

Concerning the internal pressure of the second accumulator 46, during the time 0 to t2 in which the pilot pump 43 is driven, control is performed for supplying discharge oil from the second solenoid valve 45 to the pilot pump 43, and the second accumulator 46 reaches a maximum pressure (relief pressure) of 3.5 MPa. However, from time t2 onward when the pump is stopped by the controller 52 as described above, internal leaks and the like have the effect of gradually reducing the internal pressure of the second accumulator 46. During this time, the controller 52 continues to detect the internal pressure of the second accumulator 46, and at the time point of time t3 when the internal pressure is detected to have decreased to a predetermined lower limit pressure of 1.5 MPa, a power supply to the second electric motor 44 is started by the second inverter 54 and the pilot pump 43 is driven in a low rotation state. The internal pressure of the second accumulator 46 thereby gradually increases, and at the time point of time t4 when the internal pressure is detected to have reached the maximum pressure of 3.5 MPa, the controller 52 stops the power supply to the second electric motor 44 by the second inverter 54. From this time onward, the internal pressure of the second accumulator 46 gradually decreases in the same manner as is described above. In this example, the operating device 19 is operated at time t5, and from time t5 onward when the controller 52 detects this operation, the second electric motor 44 is driven in a normal manner by the second inverter 54, the pilot pump 43 begins to be rotatably driven again, and the internal pressure of the second accumulator 46 increases to the maximum pressure 3.5 MPa.

The following is a description of the control in the first hydraulic unit 30 (drive control of the first electric motor 34) at the time when control of the second hydraulic unit 40 (drive control of the second electric motor 44) is performed in this manner. The drive control of the first electric motor 34 in the first hydraulic unit 30 essentially resembles the drive control of the second electric motor 44 in the second hydraulic unit 40 described above. The first hydraulic unit 30 is configured so that the operation by the operating levers is stopped (the operating levers are put into neutral), and while the hydraulic actuator group 31 is not actuating, the hydraulic oil discharged from the main hydraulic pump 33 returns to the hydraulic oil tank 39.

Therefore, the controller 52 performs a control for opening and closing the first solenoid valve 35 in accordance with the operation of the operating levers. Specifically, when there is a high pump discharge pressure detected by the second pressure sensor 38 while the operating levers are being operated and hydraulic oil is being sent to the hydraulic actuator group 31, the first solenoid valve 35 is opened, the high pressure is accumulated in the first accumulator 36, the first solenoid valve 35 is closed when the operating levers cease being operated, and high pressure is accumulated and maintained in the first accumulator 36. Immediately after the main hydraulic pump 33 begins to be driven (at startup), the discharge pressure of the hydraulic pump 33 is low, the first solenoid valve 35 is therefore opened, and the hydraulic pressure accumulated in the first accumulator 36 is supplied. As a result, the discharge pressure of the main hydraulic pump 33 at startup can be quickly raised, and the hydraulic actuator group 31 can be actuated quickly and smoothly.

The power shovel 1 in the present embodiment described above is configured so that when the operating device 19 remains in a non-operating state for at least a set time duration, the controller 52 automatically stops the actuating of the hydraulic units 30, 40, or in other words, stops the rotation of the hydraulic pump. Therefore, needless energy consumption in the non-operating state can be minimized. In the second hydraulic unit 40 as described above, because the internal pressure of the second accumulator 46 of the second hydraulic unit 40 is controlled so as to be maintained at 1.5 (MPa) to 3.5 (MPa) even during this stopping of actuation, the actuating control of the control valve group 32 can be performed smoothly without lag following lever operation during another startup. Similarly, in the first hydraulic unit 30 as well, actuation of the hydraulic actuator group 31 is smoothly initiated with no time lag at the startup of the main hydraulic pump 33 as well, by using the hydraulic pressure accumulated in the first accumulator 36. The upper limit value and lower limit value 3.5 (MPa) and 1.5 (MPa) of the internal pressure of the second accumulator 46 are merely an example, and can be varied as appropriate.

The present invention should not be interpreted to be limited to the embodiment above; appropriate improvements can be made within a range that does not deviate from the scope of the present invention. For example, the drive devices for driving the hydraulic pumps 33, 43 are not limited to the electric motors 34, 44; the present invention can also be applied to cases of driving these devices by using an engine. Furthermore, in the embodiment above, an example was described in which a crawler-type power shovel 1 is used, but the present invention is not limited to this example; it may also be applied to another industrial machine such as a shovel loader or a hydraulic crane, for example.

### EXPLANATION OF NUMERALS AND CHARACTERS

- 1:: power shovel
- 19:: operating means (hydraulic actuator operation means)
- 31:: hydraulic actuator group (plurality of hydraulic actuators)
- 32:: control valve group (hydraulic oil supply control valve)
- 33:: hydraulic pump
- 34:: first electric motor (hydraulic pump drive means)
- 43:: pilot pump (hydraulic pump)
- 44:: second electric motor (hydraulic pump drive means)
- 46:: second accumulator (accumulator)
- 52:: controller (pump drive control means)
- 53:: first inverter (hydraulic pump drive means)
- 54:: second inverter (hydraulic pump drive means)

## Claims

1. A control device of an industrial machine having a mechanism driven by a hydraulic actuator, the control device comprising:
a first hydraulic pump (33) for supplying hydraulic oil for actuating the hydraulic actuator (31);
a first pump drive device (34) for driving the first hydraulic pump (33);
a control valve (32) for receiving pilot pressure and performing supply control on the hydraulic oil to the hydraulic actuator (31) from the first hydraulic pump (33);
a second hydraulic pump (43) for supplying hydraulic oil for creating pilot pressure;
a second pump drive device (44) for driving the second hydraulic pump (43);
an operating device operated in order to control the actuating of the hydraulic actuator;
a pilot valve which is actuated based on the operation of the operating device and which creates pilot pressure by using the hydraulic oil pressure supplied from the second hydraulic pump;
**characterised by**
a second accumulator (46) capable of accumulating and retaining the hydraulic oil pressure supplied from the second hydraulic pump (43) to the pilot valve;
a second switching valve which is provided to a second pump oil channel leading from the second hydraulic pump (43) to the pilot valve, and which performs a control for causing the second accumulator to accumulate and retain the hydraulic oil supplied from the second hydraulic pump (43), or causing the hydraulic oil accumulated in the second accumulator to be supplied to the pilot valve; and
a second control device (52) for detecting an operating state of operating means and performing drive control on the second pump drive device as well as actuation control on the second switching valve on the basis of the operating state;
when the operating device is in a non-operating state, the second control device (52) stopping the driving of the second hydraulic pump (43) by the second pump drive device, and when the operating device is being operated, the second control device performing a control for causing the second hydraulic pump (43) to be driven by the second pump drive device and causing the hydraulic oil accumulated in the second accumulator to be supplied to the pilot valve by the second switching valve.

2. The control device according to claim 1, **characterized in that** until a predetermined time duration has elapsed immediately after the operating device has gone into a non-operating state, the second control device drives the second hydraulic pump (43) at a predetermined low rotation through the second pump drive device, and when the predetermined time duration has elapsed, the driving of the second hydraulic pump (43) is stopped.

3. The control device according to claim 1 or 2, **characterized in that** when the operating device is in a non-operating state, the second hydraulic pump (43) has stopped, and the hydraulic pressure accumulated in the second accumulator is equal to or less than a predetermined lower limit hydraulic pressure, the second control device performs a control for causing the second hydraulic pump (43) to be driven at a predetermined low rotation by the second pump drive device and causing the accumulated pressure in the second accumulator to be raised and maintained.

4. The control device according to claim 3, **characterized in that** when the second hydraulic pump (43) is driven at a predetermined low rotation to raise the accumulated pressure in the second accumulator and thereby bring the accumulated pressure to a predetermined upper limit hydraulic pressure, the second control device again stops the driving of the second hydraulic pump (43) by the second pump drive device.

5. The control device according to any of claims 1 through 4, **characterized in that** the second pump drive device is an electric motor.

6. The control device according to any of claims 1 through 5, comprising a first accumulator capable of accumulating and maintaining hydraulic oil pressure supplied from the first hydraulic pump (33) to the control valve;
a first switching valve which is provided to a first pump oil channel leading from the first hydraulic pump (33) to the control valve, and which performs a control for causing the first accumulator to accumulate and retain the hydraulic oil supplied from the first hydraulic pump, and causing the hydraulic oil accumulated in the first accumulator to be supplied to the control valve; and
a first control device for detecting the operating state of the operating means and performing drive control on the first pump drive device (34) on the basis of the operating state;
when the operating device is in a non-operating state, the first control device stopping the driving of the first hydraulic pump (33) by the first pump drive device, and when the operating device is being operated, the first control device performing a control for causing the first hydraulic pump (33) to be driven by the first pump drive device (34) and causing the hydraulic oil accumulated in the first accumulator to be supplied to the control valve (32) by the first switching valve.

7. The control device according to claim 6, **characterized in that** until a predetermined time duration has elapsed immediately after the operating device has gone into a non-operating state, the first control device drives the first hydraulic pump at a predetermined low rotation through the first pump drive device, and when the predetermined time duration has elapsed, the driving of the first hydraulic pump is stopped.

8. The control device according to any of claims 1 through 7, **characterized in that** the first pump drive device (34) is an electric motor.

## Patentansprüche

1. Steuervorrichtung für eine Industriemaschine mit einem durch einen Hydraulikaktuator angetriebenen Mechanismus, wobei die Steuervorrichtung umfasst:
eine erste Hydraulikpumpe (33) zum Zuführen von Hydrauliköl zur Betätigung des Hydraulikaktuators (31);
eine erste Pumpenantriebsvorrichtung (34) zum Antreiben der ersten Hydraulikpumpe (33);
ein Steuerventil (32) zum Aufnehmen eines Steuerdrucks und zur Durchführung einer Steuerung für das von der ersten Hydraulikpumpe (33) dem Hydraulikaktuator (31) zugeführte Hydrauliköl;
eine zweite Hydraulikpumpe (43) zum Zuführen von Hydrauliköl zur Bildung eines Steuerdrucks;
eine zweite Pumpenantriebsvorrichtung (44) zum Antreiben der zweiten Hydraulikpumpe (43);
eine Betätigungsvorrichtung zum Steuern der Betätigung des Hydraulikaktuators;
ein Pilotventil, das auf der Basis der Betätigung der Betätigungsvorrichtung betätigt wird und einen Steuerdruck unter Nutzung des von der zweiten Hydraulikpumpe zugeführten Hydrauliköldrucks erzeugt;
**gekennzeichnet durch**
einen zweiten Sammler (46) zum Sammeln und Zurückhalten des von der zweiten Hydraulikpumpe (43) dem Pilotventil zugeführten Hydrauliköldrucks;
ein zweites Schaltventil für einen zweiten Pumpenölkanal, der von der zweiten Hydraulikpumpe (43) zum Pilotventil führt, und das eine Steuerung durchführt, um ein Sammeln und Zurückhalten des von der zweiten Hydraulikpumpe (43) zugeführten Hydrauliköls durch den zweiten Sammler zu bewirken, oder um zu bewirken, dass das im zweiten Sammler gesammelte Hydrauliköl dem Pilotventil zugeführt wird; und
eine zweite Steuervorrichtung (52) zum Ermitteln eines Betätigungszustands von Betätigungsmitteln und zur Durchführung einer Antriebssteuerung für die zweite Pumpenantriebsvorrichtung sowie einer Betätigungssteuerung für das zweite Schaltventil auf der Basis des Betätigungszustands;
wenn die Betätigungsvorrichtung in einem Nichtbetätigungszustand ist, stoppt die zweite Steuervorrichtung (52) das Antreiben der zweiten Hydraulikpumpe (43) durch die zweite Pumpenantriebsvorrichtung, und wenn die Betätigungsvorrichtung in einem Betätigungszustand ist, führt die zweite Steuervorrichtung eine Steuerung durch, um zu bewirken, dass die zweite Hydraulikpumpe (43) von der zweiten Pumpenantriebsvorrichtung angetrieben wird, und zu bewirken, dass das im zweiten Sammler gesammelte Hydrauliköl durch das zweite Schaltventil dem Pilotventil zugeführt wird.

2. Steuervorrichtung nach Anspruch 1, **dadurch gekennzeichnet, dass** bis zum Ablauf einer vorbestimmten Zeitdauer unmittelbar nach Übergang der Betätigungsvorrichtung in einen Nichtbetätigungszustand die zweite Steuervorrichtung die zweite Hydraulikpumpe (43) bei einer vorbestimmten niedrigen Drehzahl durch die zweite Pumpenantriebsvorrichtung antreibt, und dass nach Ablauf der vorbestimmten Zeitdauer das Antreiben der zweiten Hydraulikpumpe (43) gestoppt wird.

3. Steuervorrichtung nach Anspruch 1 oder 2, **dadurch gekennzeichnet, dass**, wenn sich die Betätigungsvorrichtung in einem Nichtbetätigungszustand befindet, die zweite Hydraulikpumpe (43) stoppt, und der im zweiten Sammler gesammelte Hydraulikdruck einem vorbestimmten unteren Hydraulikdruckgrenzwert entspricht oder niedriger als dieser ist, die zweite Steuervorrichtung eine Steuerung durchführt, um zu bewirken, dass die zweite Hydraulikpumpe (43) bei einer vorbestimmten niedrigen Drehzahl durch die zweite Pumpenantriebsvorrichtung angetrieben und bewirkt wird, dass der gesammelte Druck im zweiten Sammler erhöht und aufrechterhalten wird.

4. Steuervorrichtung nach Anspruch 3, **dadurch gekennzeichnet, dass**, wenn die zweite Hydraulikpumpe (43) bei einer vorbestimmten niedrigen Drehzahl angetrieben wird, um den aufgebauten Druck im zweiten Sammler zu erhöhen und dadurch den aufgebauten Druck auf einen vorbestimmten oberen Hydraulikdruckgrenzwert zu bringen, die zweite Steuervorrichtung wiederum das Antreiben der zweiten Hydraulikpumpe (43) durch die zweite Pumpenantriebsvorrichtung stoppt.

5. Steuervorrichtung nach einem der Ansprüche 1 bis 4, **dadurch gekennzeichnet, dass** die zweite Pumpenantriebsvorrichtung ein Elektromotor ist.

6. Steuervorrichtung nach einem der Ansprüche 1 bis 5, umfassend: einen ersten Sammler, der von der ersten Hydraulikpumpe (33) dem Steuerventil zugeführten Hydrauliköldruck sammeln und aufrechterhalten kann;
ein erstes Schaltventil, das mit einem ersten Pumpenölkanal verbunden ist, der von der ersten Hydraulikpumpe (33) zum Steuerventil verläuft, und das eine Steuerung durchführt, um zu bewirken, dass der erste Sammler das von der ersten Hydraulikpumpe zugeführte Hydrauliköl sammelt und zurückhält, und um zu bewirken, dass das im ersten Sammler gesammelte Hydrauliköl dem Steuerventil zugeführt wird; und
eine erste Steuervorrichtung zum Ermitteln des Betätigungszustands der Betätigungsmittel und zum Durchführen einer Antriebssteuerung an der ersten Pumpenantriebsvorrichtung (34) auf der Basis des Betätigungszustands;
wenn sich die Betätigungsvorrichtung in einem Nichtbetätigungszustand befindet, stoppt die erste Steuervorrichtung das Antreiben der ersten Hydraulikpumpe (33) durch die erste Pumpenantriebsvorrichtung, und wenn sich die Betätigungsvorrichtung im Betätigungszustand befindet, führt die erste Steuervorrichtung eine Steuerung durch, um zu bewirken, dass die erste Hydraulikpumpe (33) von der ersten Pumpenantriebsvorrichtung (34) angetrieben und bewirkt wird, dass das im ersten Sammler gesammelte Hydrauliköl durch das erste Schaltventil dem Steuerventil (32) zugeführt wird.

7. Steuervorrichtung nach Anspruch 6, **dadurch gekennzeichnet, dass** bis zum Ablauf einer vorbestimmten Zeitdauer unmittelbar nach Übergang der Betätigungsvorrichtung in einen Nichtbetätigungszustand die erste Steuervorrichtung die erste Hydraulikpumpe bei einer vorbestimmten niedrigen Drehzahl durch die erste Pumpenantriebsvorrichtung antreibt, und dass nach Ablauf der vorbestimmten Zeitdauer das Antreiben der ersten Hydraulikpumpe gestoppt wird.

8. Steuervorrichtung nach einem der Ansprüche 1 bis 7, **dadurch gekennzeichnet, dass** die erste Pumpenantriebsvorrichtung (34) ein Elektromotor ist.

## Revendications

1. Dispositif de commande d'une machine industrielle ayant un mécanisme entraîné par un actionneur hydraulique, le dispositif de commande comprenant:
une première pompe hydraulique (33) pour l'alimentation en huile hydraulique pour l'actionnement de l'actionneur hydraulique (31);
un premier dispositif d'entraînement de pompe (34) pour entraîner la première pompe hydraulique (33);
une vanne de commande (32) pour recevoir la pression pilote et effectuer la commande d'alimentation en huile hydraulique de l'actionneur hydraulique (31) à partir de la première pompe hydraulique (33);
une seconde pompe hydraulique (43) pour l'alimentation en huile hydraulique pour créer la pression pilote;
un second dispositif d'entraînement de pompe (44) pour entraîner la seconde pompe hydraulique (43);
un dispositif de commande permettant de commander l'actionnement de l'actionneur hydraulique;
une vanne pilote qui est actionnée en fonction du fonctionnement du dispositif de commande et qui crée une pression pilote en utilisant la pression d'huile hydraulique fournie par la seconde pompe hydraulique;
**caractérisé par**
un second accumulateur (46) capable d'accumuler et de retenir la pression d'huile hydraulique fournie par la seconde pompe hydraulique (43) à la vanne pilote;
une seconde vanne de commutation qui est fournie à un second canal d'huile de pompe menant de la seconde pompe hydraulique (43) à la vanne pilote, et qui effectue une commande pour amener le second accumulateur à accumuler et retenir l'huile hydraulique fournie par la seconde pompe hydraulique (43), ou pour amener l'huile hydraulique accumulée dans le second accumulateur à être fournie à la vanne pilote; et
un second dispositif de commande (52) pour détecter un état de fonctionnement de moyens de fonctionnement et exécuter une commande d'entraînement sur le second dispositif d'entraînement de pompe ainsi qu'une commande d'actionnement sur la seconde vanne de commutation sur la base de l'état de fonctionnement;
lorsque le dispositif de commande est dans un état de non-fonctionnement, le second dispositif de commande (52) arrêtant l'entraînement de la seconde pompe hydraulique (43) par le second dispositif d'entraînement de pompe, et lorsque le dispositif de commande est actionné, le second dispositif de commande exécutant une commande pour faire entraîner la seconde pompe hydraulique (43) par le second dispositif d'entraînement de pompe et faire en sorte que l'huile hydraulique accumulée dans le second accumulateur soit fournie à la vanne pilote par la seconde vanne de commutation.

2. Dispositif de commande selon la revendication 1, **caractérisé en ce que** jusqu'à ce qu'une durée prédéterminée se soit écoulée immédiatement après que le dispositif de fonctionnement est passé dans un état de non-fonctionnement, le second dispositif de commande entraîne la seconde pompe hydraulique (43) à une faible rotation prédéterminée à travers le second dispositif d'entraînement de la pompe, et lorsque la durée prédéterminée s'est écoulée, l'entraînement de la seconde pompe hydraulique (43) est arrêté.

3. Dispositif de commande selon la revendication 1 ou 2, **caractérisé en ce que**, lorsque le dispositif de fonctionnement est dans un état de non-fonctionnement, que la seconde pompe hydraulique (43) s'est arrêtée et que la pression hydraulique accumulée dans le second accumulateur est égale ou inférieure à une pression hydraulique limite inférieure prédéterminée, le second dispositif de commande effectue une commande pour faire entraîner la seconde pompe hydraulique (43) à une faible rotation prédéterminée par le second dispositif d'entraînement de la pompe et faire monter et maintenir la pression accumulée dans le second accumulateur.

4. Dispositif de commande selon la revendication 3, **caractérisé en ce que** lorsque la seconde pompe hydraulique (43) est entraînée à une faible rotation prédéterminée pour augmenter la pression accumulée dans le second accumulateur et ainsi amener la pression accumulée à une pression hydraulique limite supérieure prédéterminée, le second dispositif de commande arrête à nouveau l'entraînement de la seconde pompe hydraulique (43) par le second dispositif d'entraînement de pompe.

5. Dispositif de commande selon l'une quelconque des revendications 1 à 4, **caractérisé en ce que** le second dispositif d'entraînement de pompe est un moteur électrique.

6. Dispositif de commande selon l'une quelconque des revendications 1 à 5, comprenant un premier accumulateur capable d'accumuler et de maintenir la pression d'huile hydraulique fournie par la première pompe hydraulique (33) à la vanne de commande;
une première vanne de commutation qui est fournie à un premier canal d'huile de pompe menant de la première pompe hydraulique (33) à la vanne de commande, et qui effectue une commande pour amener le premier accumulateur à accumuler et retenir l'huile hydraulique fournie par la première pompe hydraulique, et faire en sorte que l'huile hydraulique accumulée dans le premier accumulateur soit fournie à la vanne de commande; et
un premier dispositif de commande pour détecter l'état de fonctionnement du moyen de fonctionnement et effectuer une commande d'entraînement sur le premier dispositif d'entraînement de pompe (34) sur la base de l'état de fonctionnement;
lorsque le dispositif de commande est dans un état de non-fonctionnement, le premier dispositif de commande arrêtant l'entraînement de la première pompe hydraulique (33) par le premier dispositif d'entraînement de pompe, et lorsque le dispositif de commande est en fonctionnement, le premier dispositif de commande exécutant une commande pour faire entraîner la première pompe hydraulique (33) par le premier dispositif d'entraînement de pompe (34) et faire en sorte que l'huile hydraulique accumulée dans le premier accumulateur soit fournie à la vanne de commande (32) par la première vanne de commutation.

7. Dispositif de commande selon la revendication 6, **caractérisé en ce que** jusqu'à ce qu'une durée prédéterminée se soit écoulée immédiatement après que le dispositif de fonctionnement est passé dans un état de non-fonctionnement, le premier dispositif de commande entraîne la première pompe hydraulique à une faible rotation prédéterminée à travers le premier dispositif d'entraînement de pompe, et lorsque la durée prédéterminée s'est écoulée, l'entraînement de la première pompe hydraulique est arrêté.

8. Dispositif de commande selon l'une quelconque des revendications 1 à 7, **caractérisé en ce que** le premier dispositif d'entraînement de pompe (34) est un moteur électrique.
